# EUROPEAN PATENT SPECIFICATION

(11) **EP 4 603 264 B1**
(45) Date of publication and mention of the grant of the patent: **14.10.2026**
(21) Application number: 25152479.9
(22) Date of filing: 17.01.2025
(51) Int. Cl.: B29C 73/10, B29C 73/30, B29C 73/34

(54) **COMPOSITE REPAIR**
REPARATUR VON VERBUNDWERKSTOFFEN
RÉPARATION DE COMPOSITE

(30) Priority: 16.02.2024 US 202418444466
(43) Date of publication of application: 20.08.2025
(73) Proprietor: The Boeing Company, Arlington, VA 22202 (US)
(72) Inventor: Rubin, Alexander Michael, Arlington, 22202 (US); Larson, Michael H., Arlington, 22202 (US); Janda, Gwendolyn Marie, Arlington, 22202 (US); Gunther, Scott William, Arlington, 22202 (US); Shi, Ying, Arlington, 22202 (US)
(74) Representative: Witte, Weller & Partner Patentanwälte mbB

(56) References cited:
- EP-A1- 4 122 686
- EP-A1- 4 215 349
- EP-A1- 4 289 609
- US-A1- 2018 354 604

## Description

### BACKGROUND INFORMATION

### 1. Field:

The present disclosure relates generally to composite repair and more specifically to repairing thermoplastic composite parts with a heating element comprising a thermoplastic material.

### 2. Background:

Currently repair techniques for thermoplastic composite parts are under design and research. Some thermoset patches can be applied using adhesive to bond the thermoset patches onto thermoplastic parts. A heating blanket can be used to cure the thermoset patch. Current thermoset adhesion methods use an energetic surface preparation method such as plasma treatment on the thermoplastic part. Energetic surface treatments have a time limit for usability. Additionally, the energetic surface preparation methods have to be able to reach the areas to service the thermoplastic composite part. On some portions of vehicles and other platforms, access can be difficult. Joining a thermoset patch to a thermoplastic part can be undesirably time consuming and difficult to scale to large acreage parts.

Therefore, it would be desirable to have a method and apparatus that takes into account at least some of the issues discussed above, as well as other possible issues. It would be desirable to have thermoplastic repair methods that use at least one of less time or less energy.

Document EP 4 215 349 A1, according to its abstract, states a method of repairing a defect of a thermoplastic component is provided. The thermoplastic component has a thermoplastic material at the defect having a first melting temperature, and the defect has a contact surface (TC contact surface). The method includes a) providing a patch comprising a second thermoplastic material having a second melting temperature that is below the first melting temperature. The patch includes a contact surface (TP contact surface); b) disposing a portion of a heating element between the TC contact surface and the TP contact surface. The heating element is operable to heat up as a result of electrical resistance; c) forcing the TP surface toward the TC surface; and d) inputting energy into the heating element to cause the heating element to heat and maintain the TP surface at or above the second melting temperature to produce bonding between the thermoplastic component and the patch.

### SUMMARY

An embodiment of the present disclosure provides a method of repairing a thermoplastic composite part. A heating element impregnated with a thermoplastic material is placed onto a repair area of a thermoplastic composite part. The thermoplastic material of the heating element is adhered to the repair area by generating heat in the heating element from current applied to the heating element. A repair patch is placed over the heating element after adhering the heating element to the repair area. A current is applied to the heating element to heat the repair patch to a patch processing temperature.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and features thereof will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is a cross-sectional view of a repair of a thermoplastic composite part in accordance with an illustrative embodiment;
**Figure 4** is a cross-sectional view of a repair of a thermoplastic composite part in accordance with an illustrative embodiment;
**Figure 5** is a cross-sectional view of a repair of a thermoplastic composite part in accordance with an illustrative embodiment;
**Figure 6** is a cross-sectional view of a repair of a thermoplastic composite part in accordance with an illustrative embodiment;
**Figures 7A** and **7B** are a flowchart of a method of repairing a thermoplastic composite part in accordance with an illustrative embodiment;
**Figure 8** is a flowchart of a method of repairing a thermoplastic composite part in accordance with an illustrative embodiment;
**Figure 9** is a flowchart of a method of repairing a thermoplastic composite part in accordance with an illustrative embodiment;
**Figure 10** is a flowchart of a method of repairing a thermoplastic composite part in accordance with an illustrative embodiment;
**Figure 11** is an illustration of an aircraft manufacturing and service method in a form of a block diagram in accordance with an illustrative embodiment; and
**Figure 12** is an illustration of an aircraft in a form of a block diagram in which an illustrative embodiment may be implemented.

### DETAILED DESCRIPTION

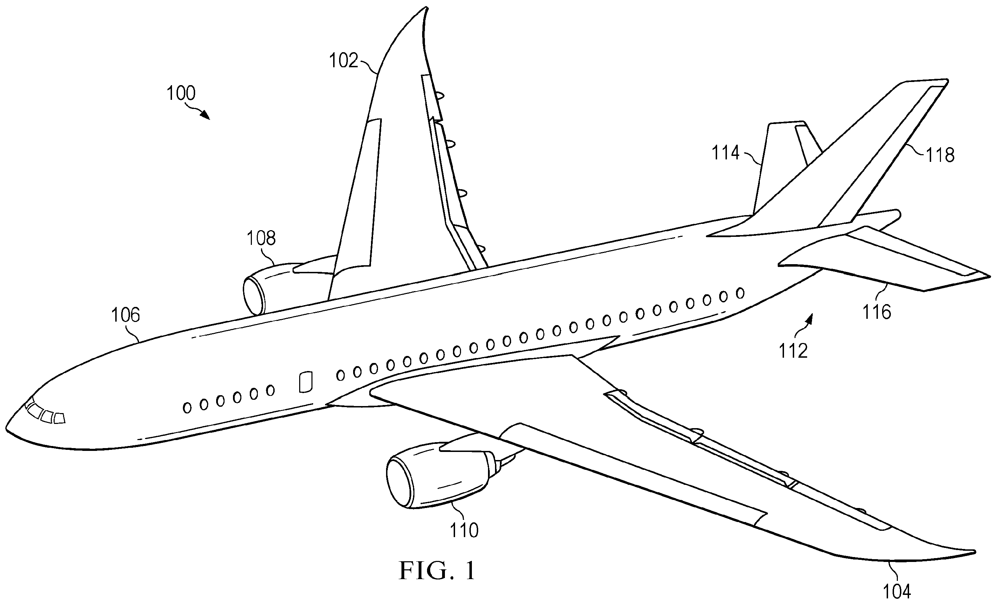

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have thermoplastic composite parts to be repaired. Thermoplastic composite parts of aircraft **100** in at least one of wing **102,** wing **104,** body **106,** horizontal stabilizer **114,** horizontal stabilizer **116,** or vertical stabilizer **118** can be repaired using the illustrative examples.

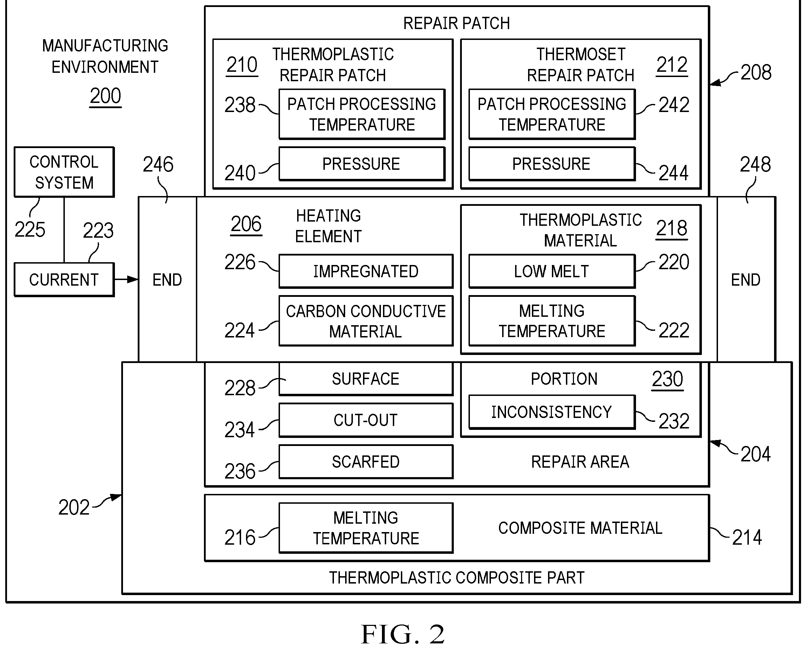

Turning now to **Figure 2****,** an illustration of a block diagram of a manufacturing environment is depicted in accordance with an illustrative embodiment. Manufacturing environment **200** is an environment in which repair of thermoplastic composite part **202** can be repaired. In this illustrative example, heating element **206** is applied to repair area **204** to adhere repair patch **208** onto thermoplastic composite part **202.** Repair patch **208** can comprise either thermoplastic repair patch **210** or thermoset repair patch **212.**

Thermoplastic composite part **202** comprises composite material **214** with melting temperature **216.** Heating element **206** is impregnated **226** with thermoplastic material **218.** Thermoplastic material **218** can be referred to as low melt **220** thermoplastic material **218.** Thermoplastic material **218** can be referred to as being low melt **220** thermoplastic material **218** due to melting temperature **222** of thermoplastic material **218** being lower than melting temperature **216** of thermoplastic composite part **202.** Heating element **206** can heat from room temperature to a desired joining temperature at a very fast rate (~150°C/min).

Carbon conductive material **224** is present in heating element **206** to melt thermoplastic material **218** to adhere heating element **206** to thermoplastic composite part **202.** Carbon conductive material **224** generates heat when current **223** is applied to carbon conductive material **224.** In some illustrative examples, carbon conductive material **224** is one of a fiber, a mesh, a coil, or a unidirectional tape. In some illustrative examples, carbon conductive material **224** generates heat to melt thermoplastic material **218.** In some illustrative examples, carbon conductive material **224** has a thickness in a range of 0.127 mm (0.005") to 0,508 mm (0.02"). Carbon conductive material **224** produces heat when current **223** is applied to carbon conductive material **224.**

Control system **225** is present to control application of current **223.** In some illustrative examples, current **223** is controlled based on a feedback control loop. A temperature sensor can be present to monitor the temperature of heating element **206.** Control system **225** is configured to control current **223** applied to carbon conductive material **224** based on the temperature of at least one of thermoplastic composite part **202,** heating element **206,** or repair patch **208.**

Thermoplastic material **218** can take any desirable form with melting temperature **222** less than melting temperature **216** of thermoplastic composite part **202.**

In some illustrative examples, thermoplastic material **218** is a polyaryletherketone. In some illustrative examples, polyaryletherketone has melting temperature **222** in a range of 260-350 degrees Celsius. In some illustrative examples, thermoplastic material **218** is a polyether ketone ketone. In some illustrative examples, thermoplastic material **218** is a polyether ether ketone. In some illustrative examples, thermoplastic material **218** is a mixture of two thermoplastic materials.

In some illustrative examples, a mixture of two thermoplastic materials has melting temperature **222** in range of 260-350 degrees Celsius and a glass transition temperature in a range of 180-200 degrees Celsius. The glass transition temperature can be used to join heating element **206** to thermoset materials, such as when repair patch **208** takes the form of thermoset repair patch **212.** In some illustrative examples, thermoplastic material **218** is a mixture when repair patch **208** takes the form of thermoset repair patch **212.**

In some illustrative examples, thermoplastic material **218** that will join thermoset repair patch **212** and thermoplastic composite part **202,** is a mixture of two thermoplastic materials. In some illustrative examples, thermoplastic material **218** that will join two thermoplastic composite components, such as thermoplastic composite part **202** and thermoplastic repair patch **210** is a single thermoplastic material with melting temperature **222.**

Heating element **206** impregnated **226** with thermoplastic material **218** is applied onto repair area **204** of thermoplastic composite part **202.** Repair area **204** can take any desirable form. In some illustrative examples, repair area **204** is surface **228** over inconsistency **232.** In these illustrative examples, inconsistency **232** can be left in thermoplastic composite part **202.**

In some illustrative examples, the repair area is created by removing an inconsistency from the thermoplastic composite part. In some illustrative examples, repair area **204** comprises surface **228** of thermoplastic composite part **202** in cut-out **234** formed by removing inconsistency **232** from thermoplastic composite part **202.**

In some illustrative examples, repair area **204** comprises portion **230** of thermoplastic composite part **202** after inconsistency **232** has been removed from thermoplastic composite part **202.** In some illustrative examples, a series of layers of composite material have been cut away from thermoplastic composite part **202** to create repair area **204.**

Repair area **204** can have any desirable size or shape. In some illustrative examples, repair area **204** is scarfed **236.**

Thermoplastic material **218** of heating element **206** is adhered to repair area **204** by generating heat in heating element **206** from current **223** applied to heating element **206.** After adhering heating element **206** to repair area **204,** repair patch **208** is placed over heating element **206.** Current **223** is applied to heating element **206** to heat repair patch **208** to a patch processing temperature.

In some illustrative examples, thermoplastic repair patch **210** is already consolidated and is the same material as thermoplastic composite part **202.** When repair patch takes the form of thermoplastic repair patch **210,** current **223** is applied to heating element **206** to heat thermoplastic repair patch **210** to patch processing temperature **238.** Patch processing temperature **238** is selected to consolidate thermoplastic repair patch **210.** In some illustrative examples, patch processing temperature **238** is approximately 280°C -340°C. In some illustrative examples, patch processing temperature **238** is approximately 310°C.

During heating of thermoplastic repair patch **210,** pressure **240** is applied to thermoplastic repair patch **210** to compress thermoplastic repair patch **210.** In some illustrative examples, pressure **240** of approximately 1.03-3.10 bar (15-45 psi) is applied to thermoplastic repair patch **210** while heating thermoplastic repair patch **210** to join thermoplastic repair patch **210** to thermoplastic composite part **202.** In some illustrative examples, pressure **240** of approximately 30 psi is applied to thermoplastic repair patch **210** while heating thermoplastic repair patch **210** to join thermoplastic repair patch **210** to thermoplastic composite part **202.** In some illustrative examples, pressure **240** is removed from thermoplastic repair patch **210** after allowing thermoplastic repair patch **210** to cool to 150°C. When repair patch takes the form of thermoset repair patch **212,** current **223** is applied to heating element **206** to heat thermoset repair patch **212** to patch processing temperature **242.** Patch processing temperature **242** is selected to cure thermoset repair patch **212.** In some illustrative examples, patch processing temperature **242** is approximately 170°C - 190°C. In some illustrative examples, patch processing temperature **242** is approximately 180°C.

During heating of thermoset repair patch **212,** pressure **244** is applied to thermoset repair patch **212** to compress thermoset repair patch **212.** In some illustrative examples, pressure **244** of approximately 60psi - 90psi is applied to thermoset repair patch **212** while heating thermoset repair patch **212** to join thermoset repair patch **212** to thermoplastic composite part **202.** In some illustrative examples, pressure **244** of approximately 5.86 bar (85 psi) is applied to thermoset repair patch **212** while heating thermoset repair patch **212** to join thermoset repair patch **212** to thermoplastic composite part **202.** In some illustrative examples, pressure **244** is removed from thermoset repair patch **212** after allowing thermoset repair patch **212** to cool to ambient temperature.

In some illustrative examples, after adhering repair patch **208** to thermoplastic composite part **202,** ends of heating element **206** can extend outside of repair patch **208.** In some illustrative examples, after adhering repair patch **208** to thermoplastic composite part **202,** ends of heating element **206** extending from thermoplastic composite part **202.** As depicted, end **246** and end **248** of heating element **206** extend out from between repair patch **208** and thermoplastic composite part **202.** As depicted, trimming ends of heating element **206** can comprise trimming end **246** and end **248.**

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, an additional heating element and an additional repair patch can be present. In some illustrative examples, a respective heating element and a respective repair patch is present on either side of inconsistency **232** of thermoplastic composite part **202** through the thickness.

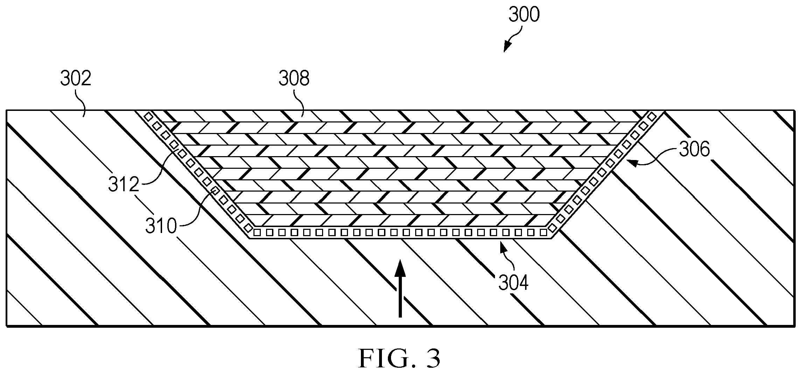

Turning now to **Figure 3****,** a cross-sectional view of a repair of a thermoplastic composite part is depicted in accordance with an illustrative embodiment. Thermoplastic composite part **302** is a physical implementation of thermoplastic composite part **202** of **Figure 2****.** In view **300,** heating element **306** has been placed onto repair area **304** of thermoplastic composite part **302.** In this illustrative example, repair area **304** comprises a portion of composite part **302** after an inconsistency has been removed from thermoplastic composite part **302.** In this illustrative example, a series of layers of composite material have been cut away from thermoplastic composite part **302** to create repair area **304.**

In this illustrative example, heating element 306 has been placed onto repair area **304** and heated to adhere heating element **306** to thermoplastic composite part **302.** After adhering heating element **306** to thermoplastic composite part **302,** repair patch **308** is placed over heating element **306.** Heating element **306** is used to heat repair patch **308** to a patch processing temperature. The patch processing temperature is selected based on a material type of repair patch **308.**

Repair patch **308** was previously laid up to approximate the layers of thermoplastic composite part **302** removed to create repair area **304.** In some illustrative examples, repair patch **308** can be referred to as a scarf patch. When repair patch **308** is placed in contact with thermoplastic material **312** of heating element **306,** repair patch **308** is in a consolidated state.

Heating element **306** is impregnated with thermoplastic material **312.** Heating element **306** comprises carbon conductive material **310** and thermoplastic material **312.** Thermoplastic material **312** is the portion of heating element **306** adhered to repair area **304** of thermoplastic composite part **302.** Carbon conductive material **310** is a portion of heating element **306** that generates heat in response to running a current into heating element **306.**

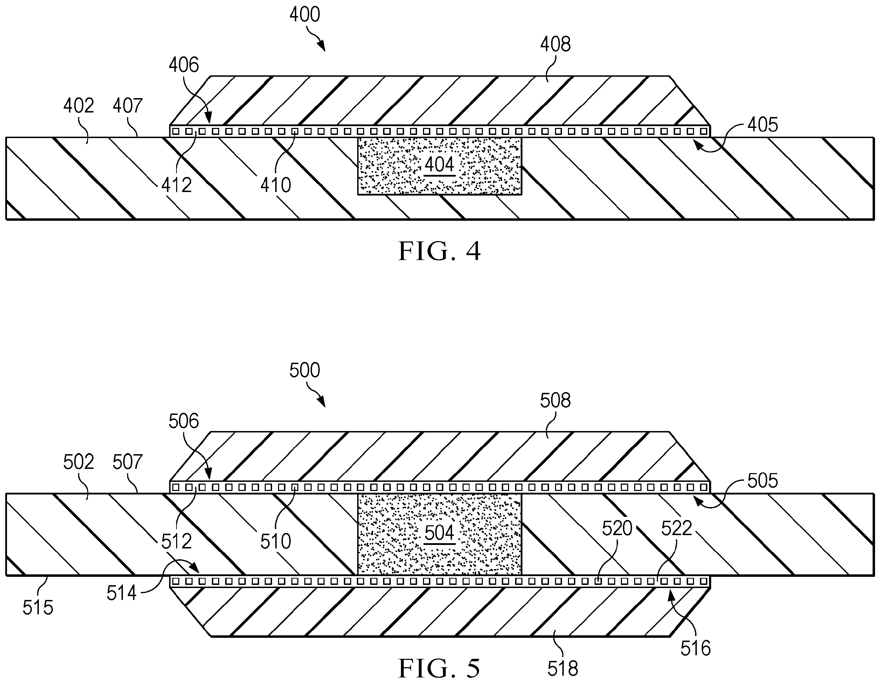

Turning now to **Figure 4****,** a cross-sectional view of a repair of a thermoplastic composite part is depicted in accordance with an illustrative embodiment. Thermoplastic composite part **402** is a physical implementation of thermoplastic composite part **202 of** **Figure 2****.** In view **400,** heating element **406** has been placed onto repair area **405** of thermoplastic composite part **402.** In this illustrative example, repair area **405** comprises a portion of surface **407** of composite part **402.** In this illustrative example, inconsistency **404** is present in thermoplastic composite part **402.** Repair area **405** is a portion of surface **407** over inconsistency **404** in thermoplastic composite part **402.**

In this illustrative example, heating element **406** has been placed onto repair area **405** and heated to adhere heating element **406** to repair area **405** of thermoplastic composite part **402.** After adhering heating element **406** to thermoplastic composite part **402,** repair patch **408** is placed over heating element **406.** Heating element **406** is used to heat repair patch **408** to a patch processing temperature. The patch processing temperature is selected based on a material type of repair patch **408.**

Repair patch **408** is laid up over inconsistency **404** without removing inconsistency **404** from thermoplastic composite part **402.** In some illustrative examples, repair patch **408** can be referred to as an external doubler. Repair patch **408** can be used for repair of inconsistencies that do not extend through the thickness of thermoplastic composite part **402.**

Heating element **406** is impregnated with thermoplastic material **412.** Heating element **406** comprises carbon conductive material **410** and thermoplastic material **412.** Thermoplastic material **412** is the portion of heating element **406** adhered to thermoplastic composite part **402.** Carbon conductive material **410** is a portion of heating element **406** that generates heat in response to running a current into heating element **406.**

Turning now to **Figure 5****,** a cross-sectional view of a repair of a thermoplastic composite part is depicted in accordance with an illustrative embodiment. Thermoplastic composite part **502** is a physical implementation of thermoplastic composite part **202** of **Figure 2****.** In view **500,** heating element **506** has been placed onto repair area **505** of thermoplastic composite part **502.** In view **500,** heating element **516** has been placed onto repair area **514** of thermoplastic composite part **502.** In this illustrative example, repair area **505** and repair area **514** are on surfaces of composite part **502.** In this illustrative example, repair area **505** comprises a portion of surface **507** of composite part **502.** In this illustrative example, inconsistency **504** is present in thermoplastic composite part **502.** Repair area **505** is a portion of surface **507** over inconsistency **504** in thermoplastic composite part **502.**

In this illustrative example, repair area **514** comprises a portion of surface **515** of composite part **502.** In this illustrative example, repair area **514** is a portion of surface **515** over inconsistency **504** in thermoplastic composite part **502.**

In this illustrative example, heating element **506** has been placed onto repair area **505** and heated to adhere heating element **506** to repair area **505** of thermoplastic composite part **502.** After adhering heating element **506** to thermoplastic composite part **502,** repair patch **508** is placed over heating element **506.** Heating element **506** is used to heat repair patch **508** to a patch processing temperature. The patch processing temperature is selected based on a material type of repair patch **508.**

Heating element **506** is impregnated with thermoplastic material **512.** Heating element **506** comprises carbon conductive material **510** and thermoplastic material **512.** Thermoplastic material **512** is the portion of heating element **506** adhered to thermoplastic composite part **502.** Carbon conductive material **510** is a portion of heating element **506** that generates heat in response to running a current into heating element **506.**

In this illustrative example, heating element **516** has been placed onto repair area **514** and heated to adhere heating element **516** to repair area **514** of thermoplastic composite part **502.** After adhering heating element **516** to thermoplastic composite part **502,** repair patch **518** is placed over heating element **516.** Heating element **516** is used to heat repair patch **518** to a patch processing temperature. The patch processing temperature is selected based on a material type of repair patch **518.**

Heating element **516** is impregnated with thermoplastic material **522.** Heating element **516** comprises carbon conductive material **520** and thermoplastic material **522.** Thermoplastic material **522** is the portion of heating element **516** adhered to thermoplastic composite part **502.** Carbon conductive material **520** is a portion of heating element **516** that generates heat in response to running a current into heating element **516.**

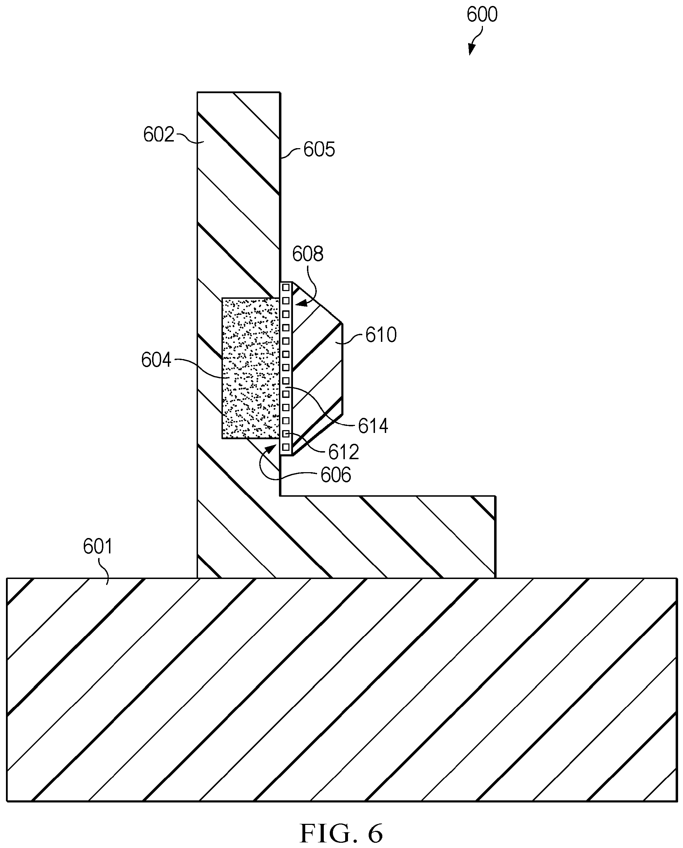

Turning now to **Figure 6****,** a cross-sectional view of a repair of a thermoplastic composite part is depicted in accordance with an illustrative embodiment. Thermoplastic composite part **602** is a physical implementation of thermoplastic composite part **202** of **Figure 2****.** In view **600,** heating element **608** has been placed onto repair area **606** of thermoplastic composite part **602.** In this illustrative example, thermoplastic composite part **602** is a stiffener. Thermoplastic composite part **602** is a stiffener joined to thermoplastic composite skin **601.**

In this illustrative example, repair area **606** comprises a portion of surface **605** of composite part **602.** In this illustrative example, inconsistency **604** is present in thermoplastic composite part **602.** Repair area **606** is a portion of surface **605** over inconsistency **604** in thermoplastic composite part **602.**

In this illustrative example, heating element **608** has been placed onto repair area **606** and heated to adhere heating element **608** to repair area **606** of thermoplastic composite part **602.** After adhering heating element **608** to thermoplastic composite part **602,** repair patch **610** is placed over heating element **608.** Heating element **608** is used to heat repair patch **610** to a patch processing temperature. The patch processing temperature is selected based on a material type of repair patch **610.**

Repair patch **610** is laid up over inconsistency **604** without removing inconsistency **604** from thermoplastic composite part **602.** In some illustrative examples, repair patch **610** can be referred to as an external doubler. Repair patch **610** can be used for repair of inconsistencies that do not extend through the thickness of thermoplastic composite part **602.**

Heating element **608** is impregnated with thermoplastic material **614.** Heating element **608** comprises carbon conductive material **612** and thermoplastic material **614.** Thermoplastic material **614** is the portion of heating element **608** adhered to thermoplastic composite part **602.** Carbon conductive material **612** is a portion of heating element **608** that generates heat in response to running a current into heating element **608.**

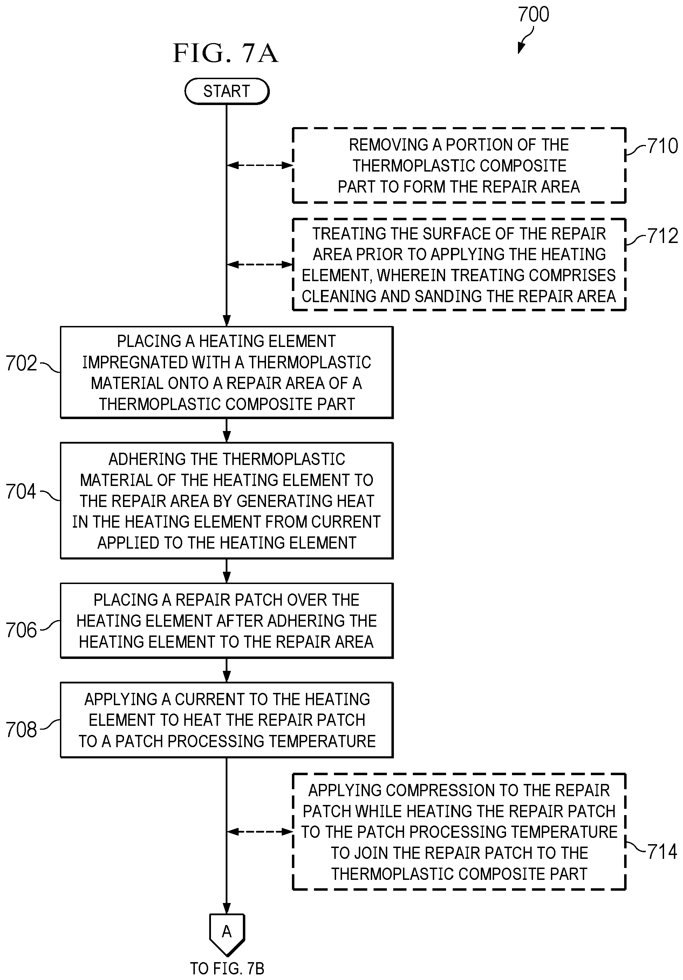

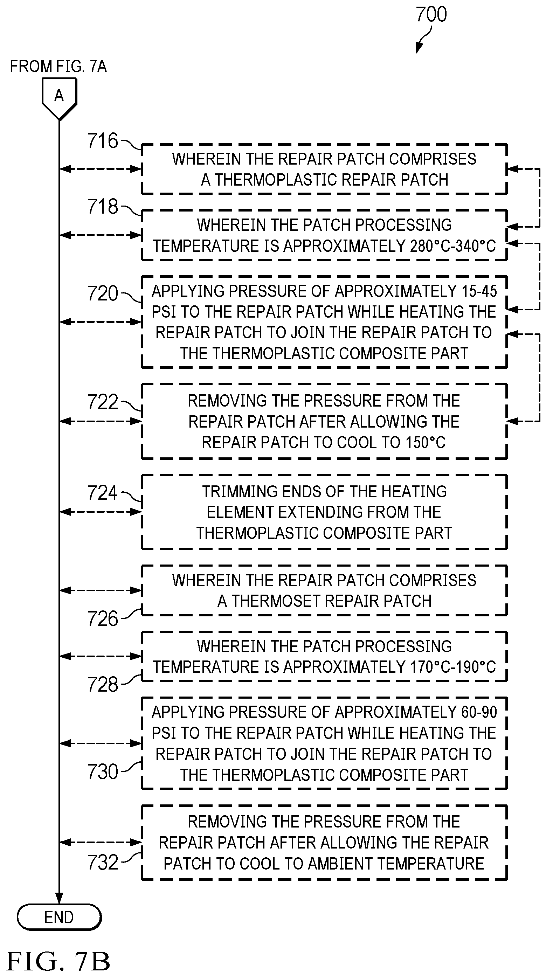

Turning now to **Figures 7A** and **7B****,** a flowchart of a method of repairing a thermoplastic composite part is depicted in accordance with an illustrative embodiment. Method **700** can be performed to repair a thermoplastic composite part of aircraft **100** of **Figure 1****.** Method **700** can be performed to repair thermoplastic composite part **202** of **Figure 2****.** Method **700** can be performed to repair thermoplastic composite part **302** of **Figure 3****.** Method **700** can be performed to repair thermoplastic composite part **402** of **Figure 4****.** Method **700** can be performed to repair thermoplastic composite part **502** of **Figure 5****.** Method **700** can be performed to repair thermoplastic composite part **602** of **Figure 6****.**

Method **700** places a heating element impregnated with a thermoplastic material onto a repair area of a thermoplastic composite part (operation **702**). The repair area can take any desirable form. In some illustrative examples, the repair area is a surface over an inconsistency. In some illustrative examples, the repair area is created by removing an inconsistency from the thermoplastic composite part. The repair area can have any desirable size or shape.

Method **700** adheres the thermoplastic material of the heating element to the repair area by generating heat in the heating element from current applied to the heating element (operation **704**). Method **700** places a repair patch over the heating element after adhering the heating element to the repair area (operation **706**). Method **700** applies a current to the heating element to heat the repair patch to a patch processing temperature (operation **708**). Afterwards, method **700** terminates.

In some illustrative examples, method **700** removes a portion of the thermoplastic composite part to form the repair area (operation **710**). In some illustrative examples, the portion of the thermoplastic composite part removed comprises an inconsistency. In some illustrative examples, removing the portion of the thermoplastic composite part comprises iteratively removing layers of the thermoplastic composite part. In some illustrative examples, removing the portion of the thermoplastic composite part comprises removing a scarfed section from the thermoplastic composite part.

In some illustrative examples, method **700** treats the surface of the repair area prior to applying the heating element, wherein treating comprises cleaning and sanding the repair area (operation **712**). In these illustrative examples, treating the surface comprises treating the surface without the use of high energy preparations. In these illustrative examples, treating the surface comprises treating the surface without plasma treatment.

In some illustrative examples, method **700** applies compression to the repair patch while heating the repair patch to the patch processing temperature to join the repair patch to the thermoplastic composite part (operation **714**). The compression is sufficient to process the material of the repair patch during heating.

In some illustrative examples, the repair patch comprises a thermoplastic repair patch (operation **716**). In some illustrative examples, the patch processing temperature is approximately 280°C-340°C (operation **718**). In some illustrative examples, the patch processing temperature is approximately 310°C. In some illustrative examples, method **700** applies pressure of approximately 1.03-3.10 bar (15 -45 psi) to the repair patch while heating the repair patch to join the repair patch to the thermoplastic composite part (operation **720**). In some illustrative examples, method **700** applies pressure of approximately 2.07 bar (30 psi) to the repair patch while heating the repair patch to join the repair patch to the thermoplastic composite part. In some illustrative examples, method **700** removes the pressure from the repair patch after allowing the repair patch to cool to 150°C (operation **722**).

In some illustrative examples, method **700** trims ends of the heating element extending from the thermoplastic composite part (operation **724**). In some illustrative examples, the ends of the heating element extending past the repair patch are trimmed. In some illustrative examples, the ends trimmed are exposed.

In some illustrative examples, the repair patch comprises a thermoset repair patch (operation **726**). In some illustrative examples, the patch processing temperature is approximately 170°C - 190°C (operation **728**). In some illustrative examples, the patch processing temperature is approximately 180°C. In some illustrative examples, method **700** applies pressure of approximately 4.14-6.21 bar (60-90 psi) to the repair patch while heating the repair patch to join the repair patch to the thermoplastic composite part (operation 730). In some illustrative examples, method **700** applies pressure of approximately 5.86 bar (85 psi) to the repair patch while heating the repair patch to join the repair patch to the thermoplastic composite part. In some illustrative examples, method **700** removes the pressure from the repair patch after allowing the repair patch to cool to ambient temperature (operation **732**)**.**

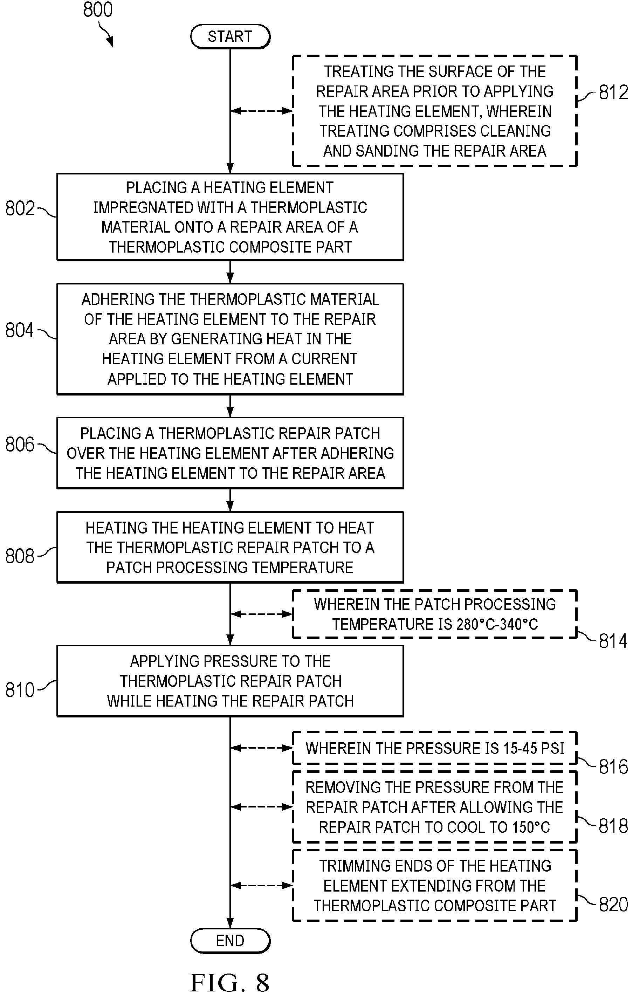

Turning now to **Figure 8****,** a flowchart of a method of repairing a thermoplastic composite part is depicted in accordance with an illustrative embodiment. Method 800 can be performed to repair a thermoplastic composite part of aircraft **100** of **Figure 1****.** Method **800** can be performed to repair thermoplastic composite part **202** of **Figure 2****.** Method **800** can be performed to repair thermoplastic composite part **302** of **Figure 3****.** Method **800** can be performed to repair thermoplastic composite part **402** of **Figure 4****.** Method **800** can be performed to repair thermoplastic composite part **502** of **Figure 5****.** Method **800** can be performed to repair thermoplastic composite part **602** of **Figure 6****.**

Method **800** places a heating element impregnated with a thermoplastic material onto a repair area of a thermoplastic composite part (operation **802**). Method **800** adheres the thermoplastic material of the heating element to the repair area by generating heat in the heating element from current applied to the heating element (operation **804**). Method **800** places a thermoplastic repair patch over the heating element after adhering the heating element to the repair area (operation **806**). Method **800** heats the thermoplastic repair patch to a patch processing temperature using a heating element (operation **808**). Method **800** applies pressure to the thermoplastic repair patch while heating the repair patch (operation **810**). Afterwards, method **800** terminates.

In some illustrative examples, method **800** treats the surface of the repair area prior to applying the heating element, wherein treating comprises cleaning and sanding the repair area (operation **812**). In these illustrative examples, treating the surface comprises treating the surface without the use of high energy preparations. In these illustrative examples, treating the surface comprises treating the surface without plasma treatment.

In some illustrative examples, the patch processing temperature is 280°C-340°C (operation **814**). In some illustrative examples, the patch processing temperature is approximately 310°C. In some illustrative examples, the pressure is 1.03-3.10 bar (15-45 psi) (operation **816**). In some illustrative examples, the pressure is approximately 2.07 bar (30 psi). In some illustrative examples, method **800** removes the pressure from the repair patch after allowing the repair patch to cool to 150°C (operation **818**).

In some illustrative examples, method **800** trims ends of the heating element extending from the thermoplastic composite part (operation **820**). The heating element remains in the thermoplastic composite part after applying the repair patch. The heating element remains in the thermoplastic composite part during operation of the platform, such as an aircraft, containing the thermoplastic composite part. In some illustrative examples, the ends of the heating element extending past the repair patch are trimmed. In some illustrative examples, the ends trimmed are exposed after adhering the repair patch to the thermoplastic composite part.

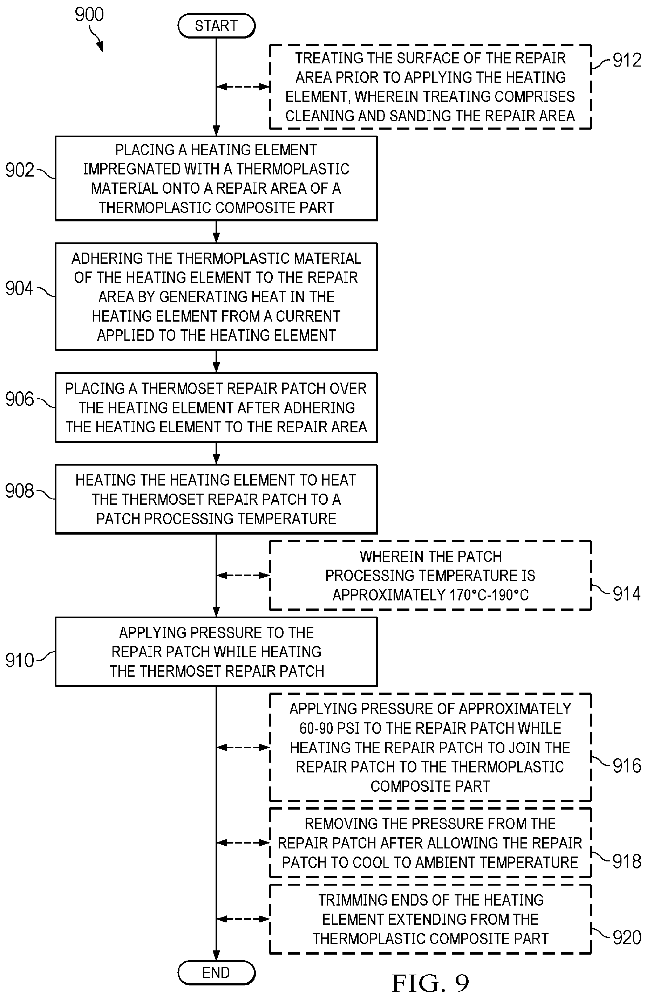

Turning now to **Figure 9****,** a flowchart of a method of repairing a thermoplastic composite part is depicted in accordance with an illustrative embodiment. Method **900** can be performed to repair a thermoplastic composite part of aircraft **100** of **Figure 1****.** Method **900** can be performed to repair thermoplastic composite part **202** of **Figure 2****.** Method **900** can be performed to repair thermoplastic composite part **302** of **Figure 3****.** Method **900** can be performed to repair thermoplastic composite part **402** of **Figure 4****.** Method **900** can be performed to repair thermoplastic composite part **502** of **Figure 5****.** Method **900** can be performed to repair thermoplastic composite part **602** of **Figure 6****.**

Method **900** places a heating element impregnated with a thermoplastic material onto a repair area of a thermoplastic composite part (operation **902**). Method **900** adheres the thermoplastic material of the heating element to the repair area by generating heat in the heating element from a current applied to the heating element (operation **904**). Method **900** places a thermoset repair patch over the heating element after adhering the heating element to the repair area (operation **906**). Method **900** heats the thermoset repair patch to a patch processing temperature using a heating element (operation **908**). Method **900** applies pressure to the repair patch while heating the thermoset repair patch (operation **910**). Afterwards, method **900** terminates.

In some illustrative examples, method **900** treats the surface of the repair area prior to applying the heating element, wherein treating comprises cleaning and sanding the repair area (operation **912**). In these illustrative examples, treating the surface comprises treating the surface without the use of high energy preparations. In these illustrative examples, treating the surface comprises treating the surface without plasma treatment.

In some illustrative examples, the patch processing temperature is approximately 170°C - 190°C. (operation **914**). In some illustrative examples, the patch processing temperature is approximately 180°C. In some illustrative examples, method **900** applies pressure of approximately 4.14-6.21 bar (60-90 psi) to the repair patch while heating the repair patch to join the repair patch to the thermoplastic composite part (operation **916**). In some illustrative examples, method **900** applies pressure of approximately 5.86 bar (85 psi) to the repair patch while heating the repair patch to join the repair patch to the thermoplastic composite part. In some illustrative examples, method **900** removes the pressure from the repair patch after allowing the repair patch to cool to ambient temperature (operation **918**).

In some illustrative examples, method **900** trims ends of the heating element extending from the thermoplastic composite part (operation **920**). The heating element remains in the thermoplastic composite part after applying the repair patch. The heating element remains in the thermoplastic composite part during operation of the platform, such as an aircraft, containing the thermoplastic composite part. In some illustrative examples, the ends of the heating element extending past the repair patch are trimmed. In some illustrative examples, the ends trimmed are exposed.

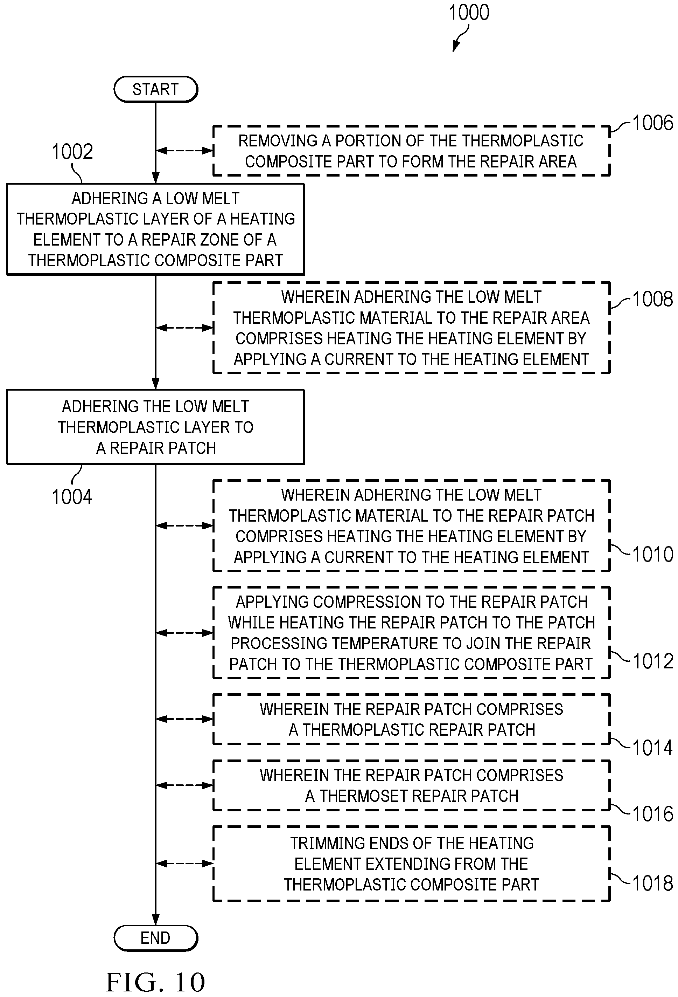

Turning now to **Figure 10****,** a flowchart of a method of repairing a thermoplastic composite part is depicted in accordance with an illustrative embodiment. Method **1000** can be performed to repair a thermoplastic composite part of aircraft **100** of **Figure 1****.** Method **1000** can be performed to repair thermoplastic composite part **202** of **Figure 2****.** Method **1000** can be performed to repair thermoplastic composite part **302** of **Figure 3****.** Method **1000** can be performed to repair thermoplastic composite part **402** of **Figure 4****.** Method **1000** can be performed to repair thermoplastic composite part **502** of **Figure 5****.** Method **1000** can be performed to repair thermoplastic composite part **602** of **Figure 6****.**

Method **1000** adheres a low melt thermoplastic material of a heating element to a repair area of a thermoplastic composite part (operation **1002**). Method **1000** adheres the low melt thermoplastic material to a repair patch (operation **1004**). Afterwards, method **1000** terminates.

In some illustrative examples, method **1000** removes a portion of the thermoplastic composite part to form the repair area (operation **1006**). In some illustrative examples, the portion of the thermoplastic composite part removed comprises an inconsistency. In some illustrative examples, removing the portion of the thermoplastic composite part comprises iteratively removing layers of the thermoplastic composite part. In some illustrative examples, removing the portion of the thermoplastic composite part comprises removing a scarfed section from the thermoplastic composite part.

In some illustrative examples, adhering the low melt thermoplastic material to the repair area comprises heating the heating element by applying a current to the heating element (operation **1008**). In some illustrative examples, the current applied to the heating element heats a carbon conductive material in the heating element. In some illustrative examples wherein adhering the low melt thermoplastic material to the repair patch comprises heating the heating element by applying a current to the heating element (operation **1010**).

In some illustrative examples, method **1000** applies compression to the repair patch while heating the repair patch to the patch processing temperature to join the repair patch to the thermoplastic composite part (operation **1012**). The amount of compression is selected based on a type of material for the repair patch.

In some illustrative examples, the repair patch comprises a thermoplastic repair patch (operation **1014**). In some other illustrative examples, the repair patch comprises a thermoset repair patch (operation **1016**). The thermoplastic material in the heating element would be different for a thermoplastic repair patch than the thermoplastic material in the heating element for a thermoset repair patch. Additionally, processing temperatures and pressures for the repair patch would differ for thermoplastic and thermoset repair patches.

In some illustrative examples, method **1000** trims ends of the heating element extending from the thermoplastic composite part (operation **1018**). The heating element remains in the thermoplastic composite part after applying the repair patch. The heating element remains in the thermoplastic composite part during operation of the platform, such as an aircraft, containing the thermoplastic composite part. Any ends of the heating element extending out of the thermoplastic composite part are trimmed.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **710** through operation **732** may be optional. For example, operation **812** through operation **820** may be optional. For example, operation **912** through operation **920** may be optional.

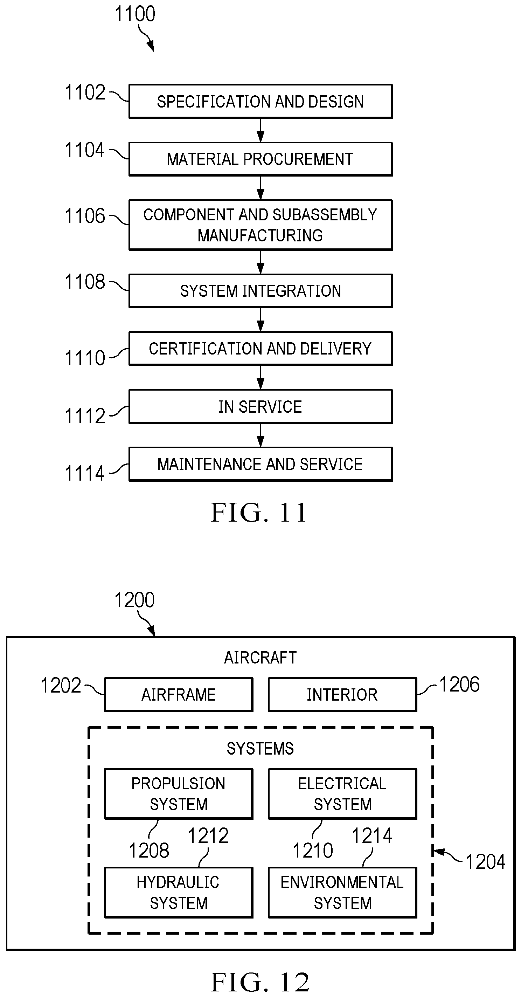

Illustrative embodiments of the present disclosure may be described in the context of aircraft manufacturing and service method **1100** as shown in **Figure 11** and aircraft **1200** as shown in **Figure 12****.** Turning first to **Figure 11****,** an illustration of an aircraft manufacturing and service method in a form of a block diagram is depicted in accordance with an illustrative embodiment. During pre-production, aircraft manufacturing and service method **1100** may include specification and design **1102** of aircraft **1200** in **Figure 12** and material procurement **1104.**

During production, component and subassembly manufacturing **1106** and system integration **1108** of aircraft **1200** takes place. Thereafter, aircraft **1200** may go through certification and delivery **1110** in order to be placed in service **1112.** While in service **1112** by a customer, aircraft **1200** is scheduled for routine maintenance and service **1114,** which may include modification, reconfiguration, refurbishment, or other maintenance and service.

Each of the processes of aircraft manufacturing and service method **1100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 12****,** an illustration of an aircraft in a form of a block diagram is depicted in which an illustrative embodiment may be implemented. In this example, aircraft **1200** is produced by aircraft manufacturing and service method **1100** of **Figure 11** and may include airframe **1202** with plurality of systems **1204** and interior **1206.** Examples of systems **1204** include one or more of propulsion system **1208,** electrical system **1210,** hydraulic system **1212,** and environmental system **1214.** Any number of other systems may be included.

Apparatuses and methods embodied herein may be employed during at least one of the stages of aircraft manufacturing and service method **1100.** One or more illustrative embodiments may be manufactured or used during at least one of component and subassembly manufacturing **1106,** system integration **1108,** in service **1112,** or maintenance and service **1114** of **Figure 11****.**

The illustrative examples use heating elements comprising thermoplastic material to join a repair patch to a thermoplastic part with an inconsistency. The illustrative examples enable the use of either thermoplastic repair patches or thermoset repair patches without a surface preparation step of the thermoplastic part. A heating element in the joining line provides localized heating to the joining area. The heating element can heat from room temperature to a desired joining temperature at a very fast rate (~150°C/min).

The illustrative examples provide methods of performing structural repair on thermoplastic parts during production and in service. The illustrative examples use low melting temperature thermoplastic materials in heating elements to join repair patches to the thermoplastic composite parts. The repair patch can be a thermoplastic composite patch or a thermoset composite patch. Depending on the material of repair patches, different thermoplastic films are used.

The illustrative examples eliminate the use of surface preparation other than cleaning or sanding for using a repair patch. The illustrative examples eliminate the use of surface preparation, including high-energy preparations such as plasma treatment, for using a repair patch. The illustrative examples eliminate the use of traditional structural adhesives in joining the repair patch to a thermoplastic composite part. The illustrative examples utilize a heating element in between the repair patch and the thermoplastic composite part to provide localized heating to join them. The use of the heating element increases efficiency and enables the repair for in service aircraft. Different thermoplastic formulations for the heating element enable repair with either a thermoplastic path or a thermoset patch.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method (700) of repairing a thermoplastic composite part (202, 302, 402, 502, 602) comprising:
placing (702) a heating element (206, 306, 406, 506, 516, 608) impregnated with a thermoplastic material (218, 312, 412, 512, 522, 614) onto a repair area (204, 304, 405, 505, 514, 606) of a thermoplastic composite part (202, 302, 402, 502, 602);
adhering (704) the thermoplastic material (218, 312, 412, 512, 522, 614) of the heating element (206, 306, 406, 506, 516, 608) to the repair area (204, 304, 405, 505, 514, 606) by generating heat in the heating element (206, 306, 406, 506, 516, 608) from current (223) applied to the heating element (206, 306, 406, 506, 516, 608);
placing (706) a repair patch (208, 308, 408, 508, 518, 610) over the heating element (206, 306, 406, 506, 516, 608) after adhering the heating element (206, 306, 406, 506, 516, 608) to the repair area (204, 304, 405, 505, 514, 606); and
applying (708) a current (223) to the heating element (206, 306, 406, 506, 516, 608) to heat the repair patch (208, 308, 408, 508, 518, 610) to a patch processing temperature (238, 242).

2. The method (700) of claim 1, further comprising:
applying (714) compression to the repair patch (208, 308, 408, 508, 518, 610) while heating the repair patch (208, 308, 408, 508, 518, 610) to the patch processing temperature (238, 242) to join the repair patch (208, 308, 408, 508, 518, 610) to the thermoplastic composite part (202, 302, 402, 502, 602).

3. The method (700) of claim 1 or 2, further comprising:
removing (710) a portion (230) of the thermoplastic composite part (202, 302, 402, 502, 602) to form the repair area (204, 304, 405, 505, 514, 606).

4. The method (700) of any of claims 1 to 3, wherein (716) the repair patch (208, 308, 408, 508, 518, 610) comprises a thermoplastic repair patch (210) or a thermoset repair patch (212).

5. The method of any of claims 1 to 4, further comprising:
trimming (724) ends (246, 248) of the heating element (206, 306, 406, 506, 516, 608) extending from the thermoplastic composite part (202, 302, 402, 502, 602).

6. The method (700) of any of claims 1 to 5, further comprising:
treating (712) a surface (228, 407, 507, 515, 605) of the repair area (204, 304, 405, 505, 514, 606) prior to applying the heating element (206, 306, 406, 506, 516, 608), wherein treating comprises cleaning and sanding the repair area (204, 304, 405, 505, 514, 606).

7. The method (800) of claim 1, wherein the repair patch (208, 308, 408, 508, 518, 610) is a thermoplastic repair patch (210), and the method (800) further comprises:
applying (810) pressure (240) to the thermoplastic repair patch (210) while heating the thermoplastic repair patch (210).

8. The method (800) of claim 7, wherein (814) the patch processing temperature (238) is 280°C - 340°C.

9. The method (800) of claim 7 or 8, further comprising:
treating (812) a surface (228, 407, 507, 515, 605) of the repair area (204, 304, 405, 505, 514, 606) prior to applying the heating element (206, 306, 406, 506, 516, 608), wherein treating comprises cleaning and sanding the repair area (204, 304, 405, 505, 514, 606).

10. The method (800) of any of claims 7 to 9, further comprising:
trimming (820) ends (246, 248) of the heating element (206, 306, 406, 506, 516, 608) extending from the thermoplastic composite part (202, 302, 402, 502, 602).

11. The method (900) of claim 1, wherein the repair patch (208, 308, 408, 508, 518, 610) is a thermosetting repair patch (210), and the method (800) further comprises: applying (910) pressure (244) to the thermoset repair patch (212) while heating the thermoset repair patch (212).

12. The method (900) of claim 11, wherein the patch processing temperature (238, 242) is approximately 170°C - 190°C.

13. The method of claim 11 or 12, further comprising:
applying pressure of approximately 4,14 bar - 6,21 bar (60 PSI -90 PSI) to the thermoset repair patch while heating the thermoset repair patch to join the thermoset repair patch to the thermoplastic composite part.

14. The method (900) of any of claims 11 to 13, further comprising:
treating (912) a surface (228, 407, 507, 515, 605) of the repair area (204, 304, 405, 505, 514, 606) prior to applying the heating element (206, 306, 406, 506, 516, 608), wherein treating comprises cleaning and sanding the repair area (204, 304, 405, 505, 514, 606).

15. The method (900) of any of claims 11 to 14, further comprising:
trimming (920) ends (246, 248) of the heating element (206, 306, 406, 506, 516, 608) extending from the thermoplastic composite part (202, 302, 402, 502, 602).

## Patentansprüche

1. Verfahren (700) zum Reparieren eines thermoplastischen Verbundteils (202, 302, 402, 502, 602), aufweisend:
Platzieren (702) eines mit einem thermoplastischen Material (218, 312, 412, 512, 522, 614) imprägnierten Heizelements (206, 306, 406, 506, 516, 608) auf einem Reparaturbereich (204, 304, 405, 505, 514, 606) eines thermoplastischen Verbundteils (202, 302, 402, 502, 602);
Anhaften (704) des thermoplastischen Materials (218, 312, 412, 512, 522, 614) des Heizelements (206, 306, 406, 506, 516, 608) an dem Reparaturbereich (204, 304, 405, 505, 514, 606) durch Erzeugen von Wärme in dem Heizelement (206, 306, 406, 506, 516, 608) aus einem an das Heizelement (206, 306, 406, 506, 516, 608) angelegten Strom (223);
Platzieren (706) eines Reparaturstücks (208, 308, 408, 508, 518, 610) über dem Heizelement (206, 306, 406, 506, 516, 608) nach dem Anhaften des Heizelements (206, 306, 406, 506, 516, 608) an dem Reparaturbereich (204, 304, 405, 505, 514, 606); und
Anlegen (708) eines Stroms (223) an das Heizelement (206, 306, 406, 506, 516, 608), um das Reparaturstück (208, 308, 408, 508, 518, 610) auf eine Stückverarbeitungstemperatur (238, 242) zu erwärmen.

2. Verfahren (700) nach Anspruch 1, des Weiteren aufweisend:
Aufbringen (714) einer Kompression auf das Reparaturstück (208, 308, 408, 508, 518, 610) während des Erwärmens des Reparaturstücks (208, 308, 408, 508, 518, 610) auf die Stückverarbeitungstemperatur (238, 242), um das Reparaturstück (208, 308, 408, 508, 518, 610) mit dem thermoplastischen Verbundteil (202, 302, 402, 502, 602) zu verbinden.

3. Verfahren (700) nach Anspruch 1 oder 2, des Weiteren aufweisend:
Entfernen (710) eines Abschnitts (230) des thermoplastischen Verbundteils (202, 302, 402, 502, 602), um den Reparaturbereich (204, 304, 405, 505, 514, 606) zu bilden.

4. Verfahren (700) nach einem der Ansprüche 1 bis 3, wobei (716) das Reparaturstück (208, 308, 408, 508, 518, 610) ein thermoplastisches Reparaturstück (210) oder ein duroplastisches Reparaturstück (212) aufweist.

5. Verfahren nach einem der Ansprüche 1 bis 4, des Weiteren aufweisend:
Beschneiden (724) von Enden (246, 248) des Heizelements (206, 306, 406, 506, 516, 608), die sich von dem thermoplastischen Verbundteil (202, 302, 402, 502, 602) erstrecken.

6. Verfahren (700) nach einem der Ansprüche 1 bis 5, des Weiteren aufweisend:
Behandeln (712) einer Oberfläche (228, 407, 507, 515, 605) des Reparaturbereichs (204, 304, 405, 505, 514, 606) vor dem Aufbringen des Heizelements (206, 306, 406, 506, 516, 608), wobei das Behandeln Reinigen und Schleifen des Reparaturbereichs (204, 304, 405, 505, 514, 606) aufweist.

7. Verfahren (800) nach Anspruch 1, wobei das Reparaturstück (208, 308, 408, 508, 518, 610) ein thermoplastisches Reparaturstück (210) ist, und das Verfahren (800) des Weiteren aufweist:
Aufbringen (810) eines Drucks (240) auf das thermoplastische Reparaturstück (210) während des Erwärmens des thermoplastischen Reparaturstücks (210).

8. Verfahren (800) nach Anspruch 7, wobei (814) die Stückverarbeitungstemperatur (238) 280°C - 340°C beträgt.

9. Verfahren (800) nach Anspruch 7 oder 8, des Weiteren aufweisend:
Behandeln (812) einer Oberfläche (228, 407, 507, 515, 605) des Reparaturbereichs (204, 304, 405, 505, 514, 606) vor dem Aufbringen des Heizelements (206, 306, 406, 506, 516, 608), wobei das Behandeln Reinigen und Schleifen des Reparaturbereichs (204, 304, 405, 505, 514, 606) aufweist.

10. Verfahren (800) nach einem der Ansprüche 7 bis 9, des Weiteren aufweisend:
Beschneiden (820) von Enden (246, 248) des Heizelements (206, 306, 406, 506, 516, 608), die sich von dem thermoplastischen Verbundteil (202, 302, 402, 502, 602) erstrecken.

11. Verfahren (900) nach Anspruch 1, wobei das Reparaturstück (208, 308, 408, 508, 518, 610) ein wärmehärtendes Reparaturstück (210) ist, und das Verfahren (800) des Weiteren aufweist:
Aufbringen (910) eines Drucks (244) auf das duroplastische Reparaturstück (212) während des Erwärmens des duroplastischen Reparaturstücks (212).

12. Verfahren (900) nach Anspruch 11, wobei die Stückverarbeitungstemperatur (238, 242) ungefähr 170°C - 190°C beträgt.

13. Verfahren nach Anspruch 11 oder 12, des Weiteren aufweisend:
Aufbringen eines Drucks von ungefähr 4,14 bar - 6,21 bar (60 PSI - 90 PSI) auf das duroplastische Reparaturstück während des Erwärmens des duroplastischen Reparaturstücks, um das duroplastische Reparaturstück mit dem thermoplastischen Verbundteil zu verbinden.

14. Verfahren (900) nach einem der Ansprüche 11 bis 13, des Weiteren aufweisend:
Behandeln (912) einer Oberfläche (228, 407, 507, 515, 605) des Reparaturbereichs (204, 304, 405, 505, 514, 606) vor dem Aufbringen des Heizelements (206, 306, 406, 506, 516, 608), wobei das Behandeln Reinigen und Schleifen des Reparaturbereichs (204, 304, 405, 505, 514, 606) aufweist.

15. Verfahren (900) nach einem der Ansprüche 11 bis 14, des Weiteren aufweisend:
Beschneiden (920) von Enden (246, 248) des Heizelements (206, 306, 406, 506, 516, 608), die sich von dem thermoplastischen Verbundteil (202, 302, 402, 502, 602) erstrecken.

## Revendications

1. Procédé (700) de réparation d'une pièce composite thermoplastique (202, 302, 402, 502, 602) comprenant :
la mise en place (702) d'un élément chauffant (206, 306, 406, 506, 516, 608) imprégné d'un matériau thermoplastique (218, 312, 412, 512, 522, 614) sur une zone de réparation (204, 304, 405, 505, 514, 606) d'une pièce composite thermoplastique (202, 302, 402, 502, 602) ;
l'adhésion (704) du matériau thermoplastique (218, 312, 412, 512, 522, 614) de l'élément chauffant (206, 306, 406, 506, 516, 608) à la zone de réparation (204, 304, 405, 505, 514, 606) en générant de la chaleur dans l'élément chauffant (206, 306, 406, 506, 516, 608) à partir d'un courant (223) appliqué à l'élément chauffant (206, 306, 406, 506, 516, 608) ;
la mise en place (706) d'un patch de réparation (208, 308, 408, 508, 518, 610) par-dessus l'élément chauffant (206, 306, 406, 506, 516, 608) après adhésion de l'élément chauffant (206, 306, 406, 506, 516, 608) à la zone de réparation (204, 304, 405, 505, 514, 606) ; et
l'application (708) d'un courant (223) à l'élément chauffant (206, 306, 406, 506, 516, 608) pour chauffer le patch de réparation (208, 308, 408, 508, 518, 610) à une température de traitement de patch (238, 242).

2. Procédé (700) selon la revendication 1, comprenant en outre :
l'application (714) d'une compression au patch de réparation (208, 308, 408, 508, 518, 610) tout en chauffant le patch de réparation (208, 308, 408, 508, 518, 610) à la température de traitement de patch (238, 242) pour joindre le patch de réparation (208, 308, 408, 508, 518, 610) à la pièce composite thermoplastique (202, 302, 402, 502, 602).

3. Procédé (700) selon la revendication 1 ou 2, comprenant en outre :
le retrait (710) d'une partie (230) de la pièce composite thermoplastique (202, 302, 402, 502, 602) pour former la zone de réparation (204, 304, 405, 505, 514, 606).

4. Procédé (700) selon l'une quelconque des revendications 1 à 3, dans lequel (716) le patch de réparation (208, 308, 408, 508, 518, 610) comprend un patch de réparation thermoplastique (210) ou un patch de réparation thermodurcissable (212).

5. Procédé selon l'une quelconque des revendications 1 à 4, comprenant en outre :
la découpe (724) d'extrémités (246, 248) de l'élément chauffant (206, 306, 406, 506, 516, 608) s'étendant à partir de la pièce composite thermoplastique (202, 302, 402, 502, 602).

6. Procédé (700) selon l'une quelconque des revendications 1 à 5, comprenant en outre :
le traitement (712) d'une surface (228, 407, 507, 515, 605) de la zone de réparation (204, 304, 405, 505, 514, 606) avant application de l'élément chauffant (206, 306, 406, 506, 516, 608), dans lequel le traitement comprend le nettoyage et le sablage de la zone de réparation (204, 304, 405, 505, 514, 606).

7. Procédé (800) selon la revendication 1, dans lequel le patch de réparation (208, 308, 408, 508, 518, 610) est un patch de réparation thermoplastique (210), et le procédé (800) comprend en outre :
l'application (810) de pression (240) au patch de réparation thermoplastique (210) tout en chauffant le patch de réparation thermoplastique (210).

8. Procédé (800) selon la revendication 7, dans lequel (814) la température de traitement de patch (238) va de 280 °C à 340 °C.

9. Procédé (800) selon la revendication 7 ou 8, comprenant en outre :
le traitement (812) d'une surface (228, 407, 507, 515, 605) de la zone de réparation (204, 304, 405, 505, 514, 606) avant application de l'élément chauffant (206, 306, 406, 506, 516, 608), dans lequel le traitement comprend le nettoyage et le sablage de la zone de réparation (204, 304, 405, 505, 514, 606).

10. Procédé (800) selon l'une quelconque des revendications 7 à 9, comprenant en outre :
la découpe (820) d'extrémités (246, 248) de l'élément chauffant (206, 306, 406, 506, 516, 608) s'étendant à partir de la pièce composite thermoplastique (202, 302, 402, 502, 602).

11. Procédé (900) selon la revendication 1, dans lequel le patch de réparation (208, 308, 408, 508, 518, 610) est un patch de réparation thermodurcissable (210), et le procédé (800) comprend en outre : l'application (910) de pression (244) au patch de réparation thermodurcissable (212) tout en chauffant le patch de réparation thermodurcissable (212).

12. Procédé (900) selon la revendication 11, dans lequel la température de traitement de patch (238, 242) va approximativement de 170 °C à 190 °C.

13. Procédé selon la revendication 11 ou 12, comprenant en outre :
l'application d'une pression d'approximativement 4,14 bar à 6,21 bar (60 PSI à 90 PSI) au patch de réparation thermodurcissable tout en chauffant le patch de réparation thermodurcissable pour joindre le patch de réparation thermodurcissable à la pièce composite thermoplastique.

14. Procédé (900) selon l'une quelconque des revendications 11 à 13, comprenant en outre :
le traitement (912) d'une surface (228, 407, 507, 515, 605) de la zone de réparation (204, 304, 405, 505, 514, 606) avant application de l'élément chauffant (206, 306, 406, 506, 516, 608), dans lequel le traitement comprend le nettoyage et le sablage de la zone de réparation (204, 304, 405, 505, 514, 606).

15. Procédé (900) selon l'une quelconque des revendications 11 à 14, comprenant en outre :
la découpe (920) d'extrémités (246, 248) de l'élément chauffant (206, 306, 406, 506, 516, 608) s'étendant à partir de la pièce composite thermoplastique (202, 302, 402, 502, 602).
